(19) Europäisches Patentamt / European Patent Office / Office européen des brevets

(11) **EP 3 306 350 B1**

## (12) FASCICULE DE BREVET EUROPEEN

(45) Date de publication et mention de la délivrance du brevet:
**15.05.2019 Bulletin 2019/20**

(51) Int Cl.:
***G01S 19/21*** *(2010.01)*     ***G01S 19/36*** *(2010.01)*

(21) Numéro de dépôt: **17195219.5**

(22) Date de dépôt: **06.10.2017**

(54) **MODULE DE DÉTECTION D'UN SIGNAL PERTURBATEUR LORS DE L'ACQUISITION INITIALE PAR UN RÉCEPTEUR D'INFORMATIONS DE NAVIGATION, RÉCEPTEUR COMPORTANT UN TEL MODULE, PROCÉDÉ ET PRODUIT PROGRAMME D'ORDINATEUR ASSOCIÉS**

MODUL ZUM ERFASSEN EINES STÖRSIGNALS BEI DER ANFANGSERFASSUNG DURCH EINEN EMPFÄNGER FÜR NAVIGATIONSDATEN, EMPFÄNGER, DER EIN SOLCHES MODUL UMFASST, ENTSPRECHENDES VERFAHREN UND ENTSPRECHENDES COMPUTERPROGRAMMPRODUKT

DETECTION MODULE OF A DISTURBANCE SIGNAL WHILE INITIAL RECEIVING BY A RECEIVER OF NAVIGATION INFORMATION, RECEIVER COMPRISING SUCH MODULE, ASSOCIATED METHOD AND COMPUTER PROGRAM PRODUCT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.10.2016 FR 1601458**

(43) Date de publication de la demande:
**11.04.2018 Bulletin 2018/15**

(73) Titulaire: **Thales**
**92400 Courbevoie (FR)**

(72) Inventeurs:
- **CORAZZA, Stéphane**
  **26000 Valence (FR)**
- **MONTAGNE, Bruno**
  **26000 Valence (FR)**
- **BOUVET, Denis**
  **26000 Valence (FR)**

(74) Mandataire: **Lavoix**
**2, place d'Estienne d'Orves**
**75441 Paris Cedex 09 (FR)**

(56) Documents cités:
**EP-A1- 2 796 895**     **US-A1- 2012 286 994**

- **Paul Montgomery ET AL: "A Multi-Antenna Defense: Receiver-Autonomous GPS Spoofing Detection", , 1 mars 2009 (2009-03-01), pages 40-46, XP055344408, Extrait de l'Internet: URL:http://www.insidegnss.com/auto/marapr09-montgomery.pdf [extrait le 2017-02-10]**
- **DANESHMAND SAEED ET AL: "A Low-Complexity GPS Anti-Spoofing Method Using a Multi-Antenna Array", GNSS 2012 - PROCEEDINGS OF THE 25TH INTERNATIONAL TECHNICAL MEETING OF THE SATELLITE DIVISION OF THE INSTITUTE OF NAVIGATION (ION GNSS 2012), THE INSTITUTE OF NAVIGATION, 8551 RIXLEW LANE SUITE 360 MANASSAS, VA 20109, USA, 21 septembre 2012 (2012-09-21), pages 1233-1243, XP056008439,**

## Description

La présente invention concerne un module de détection d'un signal perturbateur lors de l'acquisition initiale par un récepteur d'informations de navigation.

La présente invention concerne également un récepteur comportant un tel module, un procédé et un produit programme d'ordinateur associés.

Les informations de navigation sont issues d'un ou plusieurs satellites faisant partie d'un système global de positionnement par satellites connu également sous le sigle anglais GNSS (pour « *Global Navigation Satellite System* »).

Il existe actuellement plusieurs systèmes GNSS parmi lesquels on peut notamment citer le système GPS, le système GLONASS ou encore le système GALILEO dont la mise en service est prévue prochainement.

De manière générale, un système GNSS est composé d'une pluralité de satellites émettant des informations de navigation sous la forme de signaux électromagnétiques vers la surface terrestre.

Le récepteur est alors apte à recevoir ces signaux électromagnétiques pour en extraire les informations de navigation correspondantes et en analysant des informations de navigation issues de plusieurs satellites, à déterminer une solution de navigation.

Une telle solution de navigation inclut notamment la position du récepteur dans un repère terrestre, sa vitesse et l'heure synchronisée avec le système GNSS correspondant.

La réception des signaux électromagnétiques issus de satellites peut être empêchée ou perturbée par la présence de signaux perturbateurs de natures différentes.

Parmi ces signaux perturbateurs, on peut notamment citer des signaux malveillants ayant pour but de brouiller des signaux « purs » issus des satellites du système GNSS correspondant et de nuire ainsi à la détermination de la position par le récepteur.

Certains de ces signaux sont similaires aux signaux émis par le système GNSS et permettent de leurrer le récepteur en lui faisant déterminer une solution de navigation volontairement erronée.

Afin d'éviter ces situations, certains récepteurs permettent de détecter une situation de « leurrage », c'est-à-dire la présence d'un ou plusieurs signaux malveillants à proximité du récepteur.

Selon l'état de la technique, voir par exemple EP 2 796 895, la détection de situations de leurrage repose principalement sur des méthodes de vérification de la cohérence entre les signaux reçus par le récepteur et des informations sûres, c'est-à-dire des informations provenant d'une source fiable.

Les informations sûres doivent alors être connues a priori par le récepteur et comprennent par exemple la vitesse du récepteur, l'heure ou au moins partiellement, sa position.

Toutefois, de manière générale, ces informations ne peuvent pas être connues par le récepteur lors de son démarrage à froid. On entend ainsi par démarrage à froid, l'état du récepteur dans lequel aucune information sûre ne lui est connue. Cet état correspond à l'état du récepteur juste après sa mise en marche.

Pour un tel type de récepteurs, il est donc nécessaire de fournir au moins une information sûre lors de leur démarrage à froid afin qu'une situation de leurrage puisse être détectée.

On conçoit ainsi que ceci impose des contraintes opérationnelles fortes sur le fonctionnement de ce type de récepteurs.

La présente invention a alors pour but de proposer un module de détection conforme à la revendication 1.

Suivant d'autres aspects avantageux de l'invention, le module de détection comprend une ou plusieurs des caractéristiques des revendications 2 à 4.

L'invention a également pour objet un récepteur d'informations de navigation conforme à la revendication 5.

L'invention a également pour objet un procédé de détection conforme à la revendication 6.

L'invention a également pour objet un produit programme d'ordinateur comportant des instructions logicielles qui, lorsque mises en oeuvre par un équipement informatique, mettent en oeuvre le procédé tel que défini ci-dessus.

Ces caractéristiques et avantages de l'invention apparaitront à la lecture de la description qui va suivre, donnée uniquement à titre d'exemple non limitatif, et faite en référence aux dessins annexés, sur lesquels :

- la figure 1 est une vue schématique d'un récepteur d'informations de navigation selon l'invention, le récepteur comportant notamment un module de détection d'un signal perturbateur selon l'invention ; et
- la figure 2 est une vue schématique détaillée du module de détection de la figure 1.

Dans la suite de la description, l'expression « sensiblement égal à » s'entend comme une relation d'égalité à plus ou moins 10 %.

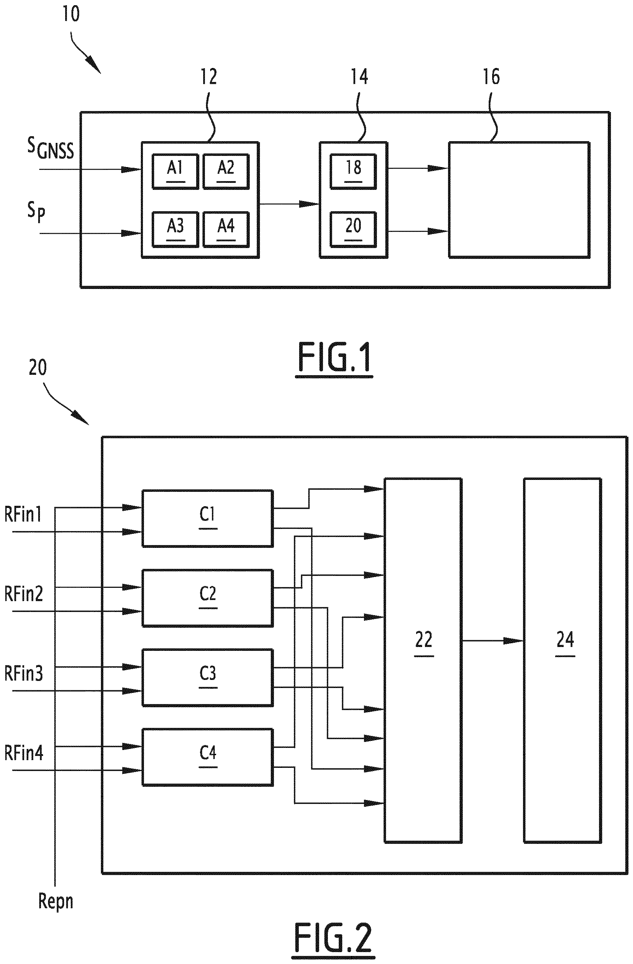

On a en effet représenté sur la figure 1, un récepteur 10 d'informations de navigation issues d'un système global de positionnement par satellites du type GNSS (de l'anglais « *Global Navigation Satellite System* »).

De manière connue en soi, un tel système de positionnement comporte une pluralité de satellites disposés sur des orbites différentes autour de la Terre.

Le nombre total des satellites est par exemple égal à 30.

Chaque satellite est apte à émettre des informations de navigation sous la forme de signaux électromagnétiques vers une partie de la surface terrestre qu'il est en train de survoler.

Chaque information de navigation comprend notamment le temps d'émission du signal correspondant, les éphémérides et l'almanach courants du satellite à partir duquel le signal a été émis.

En référence à la figure 1, le récepteur 10 comprend une antenne 12, une unité de formation 14 et une unité de traitement 16.

L'antenne 12 comprend M antennes élémentaires, M étant un nombre naturel supérieur à un.

Chacune de ces antennes élémentaires sera désignée par la suite par la référence de type $A_m$ où m est un nombre naturel variant entre 1 et M, et désignant le numéro de l'antenne élémentaire correspondante.

Dans l'exemple de réalisation de la figure 1, le nombre M total d'antennes élémentaires $A_m$ est égal à 4.

Chaque antenne élémentaire $A_m$ définit une surface de réception et est apte à recevoir des signaux électromagnétiques arrivant sur cette surface de réception selon une pluralité de directions d'arrivée.

Chaque direction d'arrivée est notamment définie par un angle d'incidence formé entre la surface de réception de l'antenne $A_m$ correspondante et une droite selon laquelle les signaux électromagnétiques correspondants se propagent.

Les signaux électromagnétiques reçus par l'antenne élémentaire $A_m$ ayant le numéro m seront désignés par la suite par la référence $RFin_m$.

Ces signaux $RFin_m$ sont variables dans le temps et comprennent notamment des signaux $S_{GNSS}$ émis par le système de positionnement et au moins un signal perturbateur $S_P$ destiné à nuire au fonctionnement du récepteur 10.

L'unité de formation 14 est une composante électronique du récepteur 10 qui est apte à acquérir les signaux électromagnétiques $RFin_m$ reçus par les antennes élémentaires $A_m$ et à traiter ces signaux comme cela sera expliqué par la suite.

En particulier, l'unité de formation 14 comporte un module formateur 18 connu en soi et permettant de former un signal résultant à partir des signaux électromagnétiques $RFin_m$ reçus par les antennes élémentaires $A_m$, et un module 20 de détection d'un signal perturbateur $S_P$ expliqué en détail par la suite.

L'unité de traitement 16 est apte à acquérir le signal résultant formé par le module formateur 18 pour en extraire les informations de navigation transmises par un ou plusieurs satellites.

L'unité de traitement 16 est apte en outre à traiter les informations de navigation pour déterminer une solution de navigation relative au récepteur 10.

Cette solution de navigation comprend notamment la position du récepteur dans un repère terrestre, sa vitesse et l'heure synchronisée avec le système de positionnement.

L'unité de traitement 16 se présente par exemple sous la forme d'un calculateur mettant en oeuvre une pluralité de logiciels configurés pour traiter les informations de navigation selon des méthodes connues en soi.

Le module de détection 20 est illustré plus en détail sur la figure 2.

Ainsi, en référence à cette figure, le module de détection 20 comporte un corrélateur $C_m$ pour chaque antenne élémentaire $A_m$, un circuit de traitement 22 et un analyseur 24.

Le module de détection 20 se présente par exemple sous la forme d'un mini-calculateur mettant en oeuvre le fonctionnement de chaque corrélateur $C_m$, du circuit de traitement 22 et de l'analyseur 24.

Selon une variante de réalisation, le module de détection 20 se présente sous la forme d'un circuit électronique intégré qui met en oeuvre le fonctionnement de chaque corrélateur $C_m$, du circuit de traitement 22 et de l'analyseur 24.

Chaque corrélateur $C_m$ est apte à acquérir les signaux électromagnétiques $RFin_m$ issus de l'antenne élémentaire $A_m$ correspondante et des signaux de réplique $Rep_n$ stockés par exemple dans l'unité de traitement 16 du récepteur 10, où n est nombre naturel variant de 1 à N.

Le nombre total N des signaux de réplique est un nombre naturel supérieur à un. Dans l'exemple de réalisation décrit, le nombre N est égal par exemple à 4.

Chaque signal de réplique $Rep_n$ est prédéterminé et est fourni par l'exploitant du système de positionnement correspondant. Ce signal est propre à chaque satellite et permet en particulier d'extraire les informations de navigation contenues dans les signaux électromagnétiques issus de ce satellite par une méthode connue en soi.

Un signal de réplique est connu également sous le nom de code d'étalement.

Chaque corrélateur $C_m$ est apte en outre à calculer sur un intervalle temporel donné, une valeur de corrélation $c_{mn}$ entre le signal $RFin_m$ correspondant et chacun des signaux de réplique $Rep_n$.

Autrement dit, la valeur de corrélation $c_{mn}$ est déterminée selon l'expression suivante :

$$c_{mn}(k) = \int_{kT}^{(k+1)T} \left(RFin_m(t)\right)^* . Rep_n(t) . dt,$$

où

$(f)^*$ signifie le conjugué d'un signal f ;
k est un nombre entier déterminant l'intervalle temporel considéré ; et
T est la durée de chaque intervalle qui est égale par exemple sensiblement à 1 ms.

Les corrélateurs $C_m$ sont aptes en outre à fournir au circuit de traitement 22 les valeurs de corrélation $c_{mn}$ déterminées pour chaque intervalle temporel considéré.

Le circuit de traitement 22 est apte à effectuer un traitement spatial des valeurs de corrélation $c_{mn}$.

En particulier, pour chaque intervalle temporel considéré, le circuit de traitement 22 est apte à déterminer une matrice d'intercorrélation R définie par l'expression suivante :

$$R = C . C^H,$$

où

C est une matrice comportant N lignes et M colonnes et composée des valeurs de corrélation $c_{mn}$ pour un même intervalle temporel ; et
$C^H$ est la matrice conjuguée transposée de la matrice C.

Le circuit de traitement est apte en outre à déterminer pour chaque intervalle temporel considéré, la valeur absolue $L = \|\det R\|$ du déterminant de la matrice d'intercorrélation R.

Cette valeur L est déterminée selon des méthodes numériques connues en soi. Un exemple d'une telle méthode est la méthode de Laplace.

L'analyseur 24 est apte à acquérir plusieurs valeurs L correspondant à des intervalles temporels différents, de préférence consécutifs. Le nombre d'intervalles considérés est par exemple égal à 4.

L'analyseur 24 est apte en outre à comparer les valeurs L acquises avec un seuil prédéterminé Th qui est inférieur par exemple à 1, de préférence inférieur à 0,5 et avantageusement sensiblement égal à 0,4.

Finalement, lorsque chaque valeur L considérée est inférieure au seuil Th, l'analyseur 24 est apte à envoyer une notification de détection d'un signal perturbateur $S_P$ à l'unité de traitement 16 du récepteur 10.

Un procédé de détection d'un signal perturbateur $S_P$ mis en oeuvre par le module de détection 14 sera désormais expliqué.

Initialement, le récepteur 10 est éteint. Autrement dit, le récepteur 10 ne comporte aucune information sûre concernant sa position actuelle, sa vitesse ou l'heure du système de positionnement.

Lorsque le fonctionnement du récepteur 10 est activé, l'unité de traitement 16 envoie au module de détection 20 une notification de démarrage à froid du récepteur 10. Cette notification active alors le fonctionnement du module de détection 20.

Lors d'une étape initiale du procédé, les corrélateurs $C_m$ acquièrent les signaux électromagnétiques $RFin_m$ issus des antennes élémentaires $A_m$ correspondantes et les signaux de réplique $Rep_n$.

Puis, les corrélateurs $C_m$ calculent les valeurs de corrélation $c_{mn}$ correspondant à ces signaux pour plusieurs intervalles temporels.

Lors d'une étape suivante, le circuit de traitement 22 détermine pour chaque intervalle temporel considéré, la valeur absolue L du déterminant de la matrice d'intercorrélation R formée des valeurs de corrélation $c_{mn}$ déterminées pour cet intervalle temporel.

Lors d'une étape suivante, l'analyseur 24 compare les valeurs L avec le seuil Th prédéterminé.

Lorsque lors de cette étape, $\max_k\{L\} < Th$, c'est-à-dire, lorsque la valeur maximale des valeurs L est inférieure au seuil Th prédéterminé, l'analyseur 24 envoie une notification à l'unité de traitement 16 signalant la présence d'un signal perturbateur $S_P$.

Dans ce cas, l'unité de traitement 16 en avertit par exemple l'utilisateur et ignore les informations de navigation extraites des signaux correspondants.

On conçoit alors que l'invention présente un certain nombre d'avantages.

En effet, des signaux perturbateurs ayant pour but de leurrer un récepteur, sont généralement émis dans la direction de ce récepteur. Ces signaux arrivent donc selon une direction d'arrivée privilégiée vers les antennes élémentaires du récepteur.

On entend ainsi par direction d'arrivée privilégiée, une pluralité de directions d'arrivée dont chaque couple de directions forme un angle inférieur par exemple à 5°, avantageusement inférieur à 2°.

Le module de détection et le procédé de détection mis en oeuvre par ce module permettent de détecter une direction d'arrivée privilégiée d'au moins deux signaux électromagnétiques parmi l'ensemble des signaux reçus pendant plusieurs intervalles temporels consécutifs de longueur prédéterminée.

La durée de cet intervalle est par exemple sensiblement égale à 4 ms.

Lorsqu'une direction d'arrivée privilégiée est détectée, le module déduit la présence d'un signal perturbateur.

La direction d'arrivée privilégiée est détectée en mettant en oeuvre une analyse de la cohérence de phases de signaux électromagnétiques reçus par les différentes antennes élémentaires.

En particulier, lors de cette analyse, le module de détection détermine une matrice d'intercorrélation correspondant à ces signaux.

Si les signaux sont issus de N directions d'arrivée différentes, alors les vecteurs formant les colonnes de cette matrice sont linéairement indépendants.

S'il existe une direction d'arrivée privilégiée, le nombre de directions d'arrivée effectives est inférieure à N et la propriété d'indépendance est alors perdue.

Dans l'exemple de réalisation décrit, pour détecter une dépendance d'au moins certaines colonnes de la matrice R, son déterminant est calculé et comparé ensuite avec un seuil dont la valeur est configurable. Cette valeur est proche de zéro.

Toutefois, l'homme du métier comprendra que de nombreuses autres méthodes de détection de colonnes dépendantes dans une matrice d'intercorrélation et plus généralement, de détection d'une direction d'arrivée privilégiée, peuvent être appliquées pour mettre en oeuvre l'invention.

Ainsi, le procédé de détection décrit ci-dessus ne représente qu'un exemple de réalisation permettant d'identifier une direction d'arrivée privilégiée.

Il est par ailleurs clair qu'il n'est pas nécessaire d'avoir une information sûre pour détecter une telle direction privilégiée de sorte que le procédé selon l'invention est particulièrement avantageux lorsqu'il est mis en oeuvre lors du démarrage à froid du récepteur.

## Revendications

1. Module (20) de détection d'un signal perturbateur ($S_P$) lors de l'acquisition initiale par un récepteur (10) d'informations de navigation issues d'un ou plusieurs satellites faisant partie d'un système global de positionnement par satellites, le récepteur (10) comportant une pluralité d'antennes élémentaires ($A_m$) aptes à recevoir selon une pluralité de directions d'arrivée, des signaux électromagnétiques ($RFin_m$) comprenant des informations de navigation, une unité de formation (14) apte à former un signal résultant à partir des signaux électromagnétiques ($RFin_m$) reçus par les antennes élémentaires ($A_m$) et une unité de traitement (16) apte à traiter le signal résultant pour en extraire des informations de navigation ;

le module de détection (20) étant intégré dans l'unité de formation (14) et apte à recevoir les signaux électromagnétiques ($RFin_m$) issus de chacune des antennes élémentaires ($A_m$), à analyser ces signaux ($RFin_m$) et à détecter un signal perturbateur ($S_P$) au démarrage à froid du récepteur (10) en cas de détection d'une direction d'arrivée privilégiée de certains des signaux électromagnétiques ($RFin_m$) ;

le module de détection comportant une pluralité de corrélateurs ($C_m$), chaque corrélateur ($C_m$) étant associé à une antenne élémentaire ($A_m$) et étant apte à calculer sur un intervalle temporel donné, une valeur de corrélation ($c_{mn}$) entre chaque signal électromagnétique ($RFin_m$) issu de l'antenne élémentaire correspondante ($A_m$) et un signal de réplique stocké dans le récepteur (10), le signal de réplique ($Rep_n$) étant prédéterminé en fonction du satellite à partir duquel les informations de navigation sont attendues ;

le module de détection étant en outre configuré pour déterminer pour un intervalle temporel donné, une matrice d'intercorrélation ($R$) correspondant au produit d'une première matrice ($C$) composée des valeurs de corrélation ($c_{mn}$) déterminées pour un même intervalle temporel à partir des signaux électromagnétiques ($RFin_m$) issus des antennes élémentaires différentes ($A_m$) et des signaux de répliques ($Rep_n$) différents, et d'une deuxième matrice ($C^H$) égale à la première matrice ($C$) conjuguée transposée ; et

le module de détection étant **caractérisé en ce qu'**il est configuré pour détecter un signal perturbateur au démarrage à froid du récepteur lorsque le déterminant de chaque matrice d'intercorrélation ($R$) parmi une pluralité de matrices d'intercorrélation ($R$) déterminées pour des intervalles temporels consécutifs différents, est strictement inférieur à un seuil prédéterminé ($Th$).

2. Module (20) selon la revendication 1, **caractérisé en ce qu'**il est configuré pour détecter un signal perturbateur au démarrage à froid du récepteur lorsque le rang de chaque matrice d'intercorrélation ($R$) parmi une pluralité de matrices d'intercorrélation ($R$) déterminées pour des intervalles temporels consécutifs différents, est strictement inférieur à sa dimension.

3. Module (20) selon la revendication 1 ou 2, **caractérisé en ce que** le seuil prédéterminé ($Th$) est inférieur à 1, avantageusement inférieur à 0,5 et de préférence sensiblement égal à 0,4.

4. Module (20) selon l'une quelconque des revendications précédentes, **caractérisé en ce qu'**en cas de détection d'un signal perturbateur ($S_P$), il est configuré pour en avertir l'unité de traitement (16) du récepteur (10).

5. Récepteur (10) d'informations de navigation issues d'un ou plusieurs satellites faisant partie d'un système global de positionnement par satellites, le récepteur (10) comportant une pluralité d'antennes élémentaires ($A_m$) aptes à recevoir des signaux électromagnétiques ($RFin_m$) selon une pluralité de directions d'arrivée, une unité de formation (14) apte à former un signal résultant à partir des signaux électromagnétiques ($RFin_m$) reçus par les antennes élémentaires ($A_m$) et une unité de traitement (16) apte à traiter le signal résultant pour en extraire des informations de navigation ;

le récepteur (10) étant **caractérisé en ce que** l'unité de formation (14) comporte un module (20) de détection d'un signal perturbateur selon l'une quelconque des revendications précédentes.

6. Procédé de détection d'un signal perturbateur ($S_P$) mis en oeuvre par un module de détection (10) selon l'une quelconque des revendications 1 à 4 au démarrage à froid du récepteur (10), le procédé comportant les étapes suivantes :

   - acquisition des signaux électromagnétiques ($RFin_m$) issus de chacun des antennes élémentaires ($A_m$) ;
   - analyse des signaux électromagnétiques ($RFin_m$) reçus ; et
   - détection d'un signal perturbateur ($S_P$) en cas de détection d'une direction d'arrivée privilégiée d'au moins certains des signaux électromagnétiques (RFin$_m$),

- calcul sur un intervalle temporel donné, une valeur de corrélation (c$_{mn}$) entre chaque signal électromagnétique (RFin$_m$) issu de l'antenne élémentaire correspondante (A$_m$) et un signal de réplique stocké dans le récepteur (10), le signal de réplique (Rep$_n$) étant prédéterminé en fonction du satellite à partir duquel les informations de navigation sont attendues,

- détermination pour un intervalle temporel donné, une matrice d'intercorrélation (R) correspondant au produit d'une première matrice (C) composée des valeurs de corrélation (c$_{mn}$) déterminées pour un même intervalle temporel à partir des signaux électromagnétiques (RFin$_m$) issus des antennes élémentaires différentes (A$_m$) et des signaux de répliques (Rep$_n$) différents, et d'une deuxième matrice (C$^H$) égale à la première matrice (C) conjuguée transposée,

- détection d'un signal perturbateur au démarrage à froid du récepteur lorsque le déterminant de chaque matrice d'intercorrélation (R) parmi une pluralité de matrices d'intercorrélation (R) déterminées pour des intervalles temporels consécutifs différents, est strictement inférieur à un seuil prédéterminé (Th).

7. Produit programme d'ordinateur comportant des instructions logicielles qui, lorsque mises en oeuvre par un module selon la revendication 1, mettent en oeuvre le procédé selon la revendication 6.

**Patentansprüche**

1. Modul (20) zum Detektieren eines Störsignals (S$_P$) während der initialen Erlangung durch einen Empfänger (10) von Navigationsinformationen, welche von einem oder mehreren Satelliten, die zu einem globalen Satellitenpositionsbestimmungssystem gehören, stammen, wobei der Empfänger (10) eine Mehrzahl von Antennenelementen (A$_m$), welche dazu eingerichtet sind, elektromagnetische Signale (RFin$_m$), welche Navigationsinformationen enthalten, entlang einer Mehrzahl von Einfallsrichtungen zu empfangen, eine Bildungseinheit (14), welche dazu eingerichtet ist, ein resultierendes Signal aus den elektromagnetischen Signalen (RFin$_m$), welche durch die Antennenelemente (A$_m$) empfangen werden, zu bilden, und eine Verarbeitungseinheit (16), welche dazu eingerichtet ist, das resultierende Signal zu verarbeiten, um die Navigationsinformationen daraus zu extrahieren, aufweist, wobei das Modul zum Detektieren (20) in die Bildungseinheit (14) integriert ist und dazu eingerichtet ist, die elektromagnetischen Signale (RFin$_m$), welche von jedem der Antennenelemente (A$_m$) stammen, zu erhalten, diese Signale (RFin$_m$) zu analysieren und ein Störsignal (S$_p$) beim Kaltstarten des Empfängers (10) im Fall des Detektierens einer bevorzugten Einfallsrichtung von bestimmten der elektromagnetischen Signale (RFin$_m$) zu detektieren, das Modul zum Detektieren aufweisend eine Mehrzahl von Korrelatoren (C$_m$), wobei jeder Korrelator (C$_m$) mit einem Antennenelement (A$_m$) assoziiert ist und dazu eingerichtet ist, über ein gegebenes Zeitintervall einen Korrelationswert (c$_{mn}$) zwischen jedem elektromagnetischen Signal (RFin$_m$), welches von dem jeweiligen Antennenelement (A$_m$) stammt, und einem in dem Empfänger (10) gespeicherten Repliksignal (Rep$_n$) zu berechnen, wobei das Repliksignal (Rep$_n$) in Abhängigkeit von dem Satelliten, von welchem die Navigationsinformationen erwartet werden, vorbestimmt ist,

wobei das Modul zum Detektieren ferner dazu eingerichtet ist, für ein gegebenes Zeitintervall eine Interkorrelationsmatrix (R) zu ermitteln, welche dem Produkt aus einer ersten Matrix (C), die aus den Korrelationswerten (c$_{mn}$), welche für dasselbe Zeitintervall aus den von unterschiedlichen Antennenelementen (A$_m$) stammenden elektromagnetischen Signalen (RFin$_m$) und den unterschiedlichen Repliksignalen (Rep$_n$) ermittelt werden, gebildet ist, und einer zweiten Matrix (C$^H$), welche gleich der konjugierten, transponierten ersten Matrix (C) ist, entspricht, und

wobei das Modul zum Detektieren **dadurch gekennzeichnet ist, dass** es dazu eingerichtet ist, ein Störsignal beim Kaltstarten des Empfängers zu detektieren, wenn die Determinante jeder Interkorrelationsmatrix (R) aus einer Mehrzahl von Interkorrelationsmatrizen (R), welche für unterschiedliche aufeinanderfolgende Zeitintervalle ermittelt werden, echt kleiner einem vorbestimmten Schwellenwert (Th) ist.

2. Modul (20) gemäß dem Anspruch 1, **gekennzeichnet dadurch, dass** es dazu eingerichtet ist, ein Störsignal beim Kaltstarten des Empfängers zu detektieren, wenn der Rang jeder Interkorrelationsmatrix (R) aus einer Mehrzahl von Interkorrelationsmatrizen (R), welche für unterschiedliche aufeinanderfolgende Zeitintervalle ermittelt werden, echt kleiner ihrer Dimension ist.

3. Modul (20) gemäß dem Anspruch 1 oder 2, **gekennzeichnet dadurch, dass** der vorbestimmte Schwellenwert (Th) kleiner 1 ist, vorteilhafterweise kleiner 0,5 ist und vorzugsweise im Wesentlichen gleich 0,4 ist.

4. Modul (20) gemäß irgendeinem der vorstehenden Ansprüche, **gekennzeichnet dadurch, dass**, im Fall der Detektion eines Störsignals (S$_p$), es dazu eingerichtet ist, die Verarbeitungseinheit (16) des Empfängers (10) zu benachrichtigen.

5. Empfänger (10) von Navigationsinformationen, welche von einem oder mehreren Satelliten, die zu einem globalen Satellitenpositionsbestimmungssystem gehören, stammen, wobei der Empfänger (10) eine Mehrzahl von Antennenelementen ($A_m$), welche dazu eingerichtet sind, elektromagnetische Signale ($RFin_m$) entlang einer Mehrzahl von Einfallsrichtungen zu empfangen, eine Bildungseinheit (14), welche dazu eingerichtet ist, ein resultierendes Signal aus den elektromagnetischen Signalen ($RFin_m$), welche durch die Antennenelemente ($A_m$) empfangen werden, zu bilden, und eine Verarbeitungseinheit (16), welche dazu eingerichtet ist, das resultierende Signal zu verarbeiten, um die Navigationsinformationen daraus zu extrahieren, aufweist, wobei der Empfänger (10) **dadurch gekennzeichnet ist, dass** die Bildungseinheit (14) ein Modul (20) zum Detektieren eines Störsignals gemäß irgendeinem der vorstehenden Ansprüche aufweist.

6. Verfahren zum Detektieren eines Störsignals ($S_P$), welches durch ein Modul zum Detektieren (10) gemäß irgendeinem der Ansprüche 1 bis 4 beim Kaltstarten eines Empfängers (10) durchgeführt wird, wobei das Verfahren die folgenden Schritte aufweist:

  - Erlangen von elektromagnetischen Signalen ($RFin_m$), welche von jedem der Antennenelemente ($A_m$) stammen,
  - Analyse der erhaltenen elektromagnetischen Signale ($RFin_m$), und
  - Detektieren eines Störsignals ($S_p$) im Fall des Detektierens einer bevorzugten Einfallsrichtung von mindestens bestimmten der elektromagnetischen Signale ($RFin_m$),
  - Berechnen, über ein gegebenes Zeitintervall, eines Korrelationswerts ($c_{mn}$) zwischen jedem elektromagnetischen Signal ($RFin_m$), welches von dem zugehörigen Antennenelement ($A_m$) stammt, und einem in dem Empfänger (10) gespeicherten Repliksignal ($Rep_n$), wobei das Repliksignal ($Rep_n$) in Abhängigkeit von dem Satelliten, von welchem die Navigationsinformationen erwartet werden, vorbestimmt ist,
  - Ermitteln für ein gegebenes Zeitintervall eine Interkorrelationsmatrix (R), welche dem Produkt aus einer ersten Matrix (C), die aus den Korrelationswerten ($c_{mn}$), welche für dasselbe Zeitintervall aus den von unterschiedlichen Antennenelementen ($A_m$) stammenden elektromagnetischen Signalen ($RFin_m$) und den unterschiedlichen Repliksignalen ($Rep_n$) ermittelt werden, gebildet ist, und einer zweiten Matrix ($C^H$), welche gleich der konjugierten, transponierten ersten Matrix (C) ist, entspricht,
  - Detektieren eines Störsignals beim Kaltstarten des Empfängers, wenn die Determinante jeder Interkorrelationsmatrix (R) aus einer Mehrzahl von Interkorrelationsmatrizen (R), welche für unterschiedliche aufeinanderfolgende Zeitintervalle ermittelt werden, echt kleiner einem vorbestimmten Schwellenwert (Th) ist.

7. Computerprogrammprodukt, welches logische Anweisungen aufweist, die, wenn sie durch ein Modul gemäß dem Anspruch 1 ausgeführt werden, das Verfahren gemäß dem Anspruch 6 umsetzen.

**Claims**

1. A module (20) for detecting a disturbance signal ($S_P$) during initial receiving by a receiver (10) of navigation information from one or several satellites belonging to a global satellite positioning system, the receiver (10) including a plurality of elementary antennas ($A_m$) able to receive, in a plurality of arrival directions, electromagnetic signals ($RFin_m$) comprising navigation information, a forming unit (14) able to form a resultant signal from the electromagnetic signals ($RFin_m$) received by the elementary antennas ($A_m$) and a processing unit (16) able to process the resultant signal to extract navigation information therefrom;

the detection module (20) being integrated into the forming unit (14) and able to receive the electromagnetic signals ($RFin_m$) coming from each of the elementary antennas ($A_m$), analyze these signals ($RFin_m$) and detect a disturbance signal ($S_P$) when the receiver (10) is started cold in case of detection of a favored arrival direction of some of the electromagnetic signals ($RFin_m$);

the detection module comprising:

  a plurality of correlators ($C_m$), each correlator ($C_m$) being associated with an elementary antenna ($A_m$) and being able to calculate, over a given time interval, a correlation value ($c_{mn}$) between each electromagnetic signal ($RFin_m$) from the corresponding elementary antenna ($A_m$) and a reply signal stored in the receiver (10), the reply signal ($Rep_n$) being predetermined as a function of the satellite from which the navigation information is expected;

  the detection module being further configured for determining for a given time interval, an intercorrelation matrix (R) corresponding to the product of a first matrix (C) made up of the correlation values ($c_{mn}$) determined for the same time interval from electromagnetic signals ($RFin_m$) from different elementary antennas ($A_m$) and different reply signals ($Rep_n$), and a second matrix ($C^H$) equal to the first transposed conjugated matrix (C); and

the detection module being **characterized in that** it is configured for detecting a disturbance signal when the receiver is started cold when the determinant of each intercorrelation matrix ($R$) from among a plurality of intercorrelation matrices ($R$) determined for different consecutive time intervals is strictly below a predetermined threshold ($Th$).

2. The module (20) according to claim 1, **characterized in that** it is configured for detecting a disturbance signal when the receiver is started cold when the rank of each intercorrelation matrix ($R$) from among a plurality of intercorrelation matrices ($R$) determined for different consecutive time intervals is strictly smaller than its size.

3. The module (20) according to claim 1 or 2, **characterized in that** the predetermined threshold ($Th$) is less than 1, advantageously less than 0.5 and preferably substantially equal to 0.4.

4. The module (20) according to any one of the preceding claims, **characterized in that** if a disturbance signal ($S_P$) is detected, it is configured for notifying the processing unit (16) of the receiver (10).

5. A receiver (10) of navigation information from one or several satellites belonging to a global satellite positioning system, the receiver (10) including a plurality of elementary antennas ($A_m$) able to receive electromagnetic signals ($RFin_m$) in a plurality of arrival directions, a forming unit (14) able to form a resultant signal from the electromagnetic signals ($RFin_m$) received by the elementary antennas ($A_m$) and a processing unit (16) able to process the resultant signal to extract navigation information therefrom; the receiver (10) being **characterized in that** the forming unit (14) includes a module (20) for detecting a disturbance signal according to any one of the preceding claims.

6. A method for detecting a disturbance signal ($S_P$) carried out by a detection module (10) according to any one of claims 1 to 4 when the receiver (10) is started cold, the method including the following steps:

   - acquiring electromagnetic signals ($RFin_m$) from each of the elementary antennas ($A_m$);
   - analyzing the received electromagnetic signals ($RFin_m$); and
   - detecting a disturbance signal ($S_P$) if a favored arrival direction of at least some of the electromagnetic signals is detected ($RFin_m$);
   - calculating, over a given time interval, a correlation value ($c_{mn}$) between each electromagnetic signal ($RFin_m$) from the corresponding elementary antenna ($A_m$) and a reply signal stored in the receiver (10), the reply signal ($Rep_n$) being predetermined as a function of the satellite from which the navigation information is expected;
   - determining for a given time interval, an intercorrelation matrix ($R$) corresponding to the product of a first matrix ($C$) made up of the correlation values ($c_{mn}$) determined for the same time interval from electromagnetic signals ($RFin_m$) from different elementary antennas ($A_m$) and different reply signals ($Rep_n$), and a second matrix ($C^H$) equal to the first transposed conjugated matrix ($C$);
   - detecting a disturbance signal when the receiver is started cold when the determinant of each intercorrelation matrix ($R$) from among a plurality of intercorrelation matrices ($R$) determined for different consecutive time intervals is strictly below a predetermined threshold ($Th$).

7. A computer program product comprising software instructions which, when implemented by a module according to claim 1, carry out the method according to claim 6.

## FIG.1

## FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2796895 A